Europäisches Patentamt

European Patent Office

Office européen des brevets

(11) Publication number: **0 186 366**
**A2**

## (12) EUROPEAN PATENT APPLICATION

(21) Application number: 85308946.4

(22) Date of filing: 10.12.85

(51) Int. Cl.⁴: **B60R 1/06**

(30) Priority: 22.12.84 GB 8432580

(43) Date of publication of application:
02.07.86 Bulletin 86/27

(84) Designated Contracting States:
DE FR GB

(71) Applicant: BRITAX (WINGARD) LIMITED
Chandler Road
Chichester West Sussex PO19 2UG(GB)

(72) Inventor: Boddy, Ian
9 Greencourt Drive
Bognor Regis West Sussex(GB)

(74) Representative: Hollinghurst, Antony
Britax Limited Patent Department Kingsham Road
Chichester West Sussex PO19 2UG(GB)

(54) Motor vehicle rearview mirror.

(57) An exterior rearview mirror for a motor vehicle comprises a base member (10) adapted to be mounted on a vehicle body, a mirror housing (20) mounted on the base member (10) for angular movement relative thereto about a breakaway axis (16,18), and a reflective member (30) mounted in the mirror housing (20) for angular movement about first and second mutually non-parallel adjustment axes lying in a plane parallel to the plane of the reflective member (30). A coupling member (64) is mounted coaxial with the breakaway axis (16, 18) and has one end (68) coupled to drive means (72) for effecting selective angular movement of the coupling member (64) about the breakaway axis (16, 18) and axial movement of the coupling member (64) along the breakaway axis (16, 18). Driven means (44) is coupled to the other end (66) of the coupling member (64) and arranged to cause angular movement of the reflective member (30) about the first adjustment axis in response to axial movement of the coupling member (64) and angular movement of the reflective member (30) about the second adjustment axis in response to angular movement of the coupling member (64).

FIG.1

## MOTOR VEHICLE REARVIEW MIRROR

This invention relates to an exterior rearview mirror for a motor vehicle of the type in which the orientation of the reflective member relative to the mirror housing is adjustable from the interior of the vehicle and in which the housing is itself pivotally mounted for angular movement about a breakaway axis so as to be displaceable against the side of the vehicle body in the event of impact.

According to the invention, an exterior rearview mirror of the foregoing type comprises a base member adapted to be mounted on a vehicle body, a mirror housing mounted on the base member for angular movement relative thereto about a breakaway axis, a reflective member mounted in the mirror housing for angular movement about first and second mutually non-parallel adjustment axes lying in the plane of the reflective member, a coupling member coaxial with the breakaway axis and having one end coupled to drive means for effecting selective angular movement of the coupling member about the breakaway axis and axial movement of the coupling member along the breakaway axis, and driven means coupled to the other end of the coupling member and arranged to cause angular movement of the reflective member about the first adjustment axis in response to axial movement of the coupling member and angular movement of the reflective member about the second adjustment axis in response to angular movement of the coupling member.

The drive means may comprise a lever pivotally mounted on the base member for angular movement about two axes one parallel to and the other perpendicular to the breakaway axis, the coupling member being coupled to such lever at a location spaced from said pivot axes.

The driven means may comprise a part-spherical member resiliently biased into engagement with a part-spherical surface of the mirror housing of equal radius but opposite curvature so as to permit relative angular movement about the centre of curvature, the part-spherical member having a first projection coupled to the reflective member, a second projection adapted to engage with an abutment surface of the base member and a third projection offset relative to a line joining the first and second projections and coupled to the coupling member, so that angular movement of the coupling member causes corresponding angular movement of the part-spherical member about an axis parallel to the breakaway axis and axial movement of the coupling member causes angular movement of the part-spherical member about an axis passing through the centre of curvature of the part-spherical surface and the first projection therefrom.

It will usually be convenient for the third projection from the part-spherical surface to project on the opposite side of the aforesaid line joining the first and second projections. This has the advantage that the coupling member can be accommodated behind the surface of the reflective member of the mirror, but results in upward movement of the coupling member causing the reflective member to tilt downwards. It is therefore preferable for the second pivot axis of the lever to be on the same side of the point of attachment of the coupling member as the end of the lever which is manipulated by the user while the first pivot axis is on the opposite side of such point of attachment. The result of this is that downward movement of the operator's hand causes upward movement of the coupling member and thus causes downward tilting of the mirror while forward movement of the user's hand causes outward pivoting of the mirror.

An embodiment of the invention will now be described, by way of example, with reference to the accompanying drawings, in which:

Figure 1 is a partially broken away elevational view from the rear of a mirror in accordance with the invention;

Figure 2 is a cross-sectional view taken on the line 2 - 2 in Figure 1;

Figure 3 is a cross-sectional view taken on the line 3 - 3 in Figure 1;

Figure 4 is a cross-sectional view taken on the line 4 - 4 in Figure 1; and

Figure 5 is an exploded view of the operating mechanism of the embodiment shown in Figure 1.

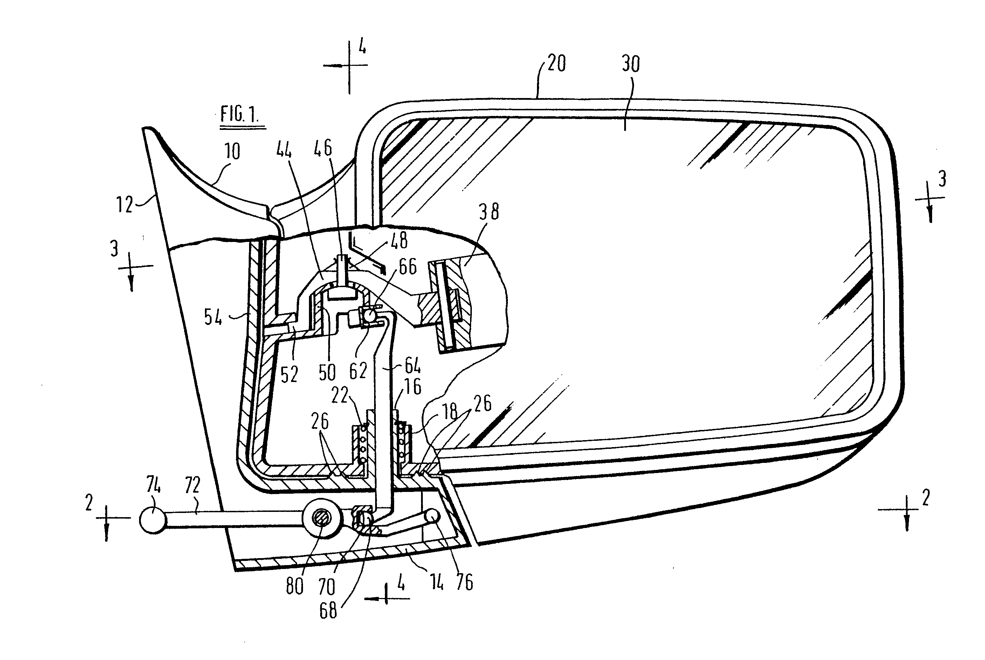

As illustrated in Figures 1 to 4, a rearview mirror has a bracket 10 with a surface 12 arranged to abut against the body of a vehicle. The bracket 12 is generally L-shaped, having a hollow horizontal limb 14 projecting outwardly from the side of the vehicle body. A bush 16 projects upwardly from the limb 14 and serves as a pivot axis for a cylindrical socket 18 formed on a mirror housing 20. A compression spring 22 is located in the annualar space between the bush 16 and the socket 18 and engages between a cross-pin 24 on the former and the bottom of the latter so as to urge the bottom surface of the housing 20 into engagement with the upper surface of the limb 14. Triangular detent formations 26 on the upper surface of the limb 14 engage in complementary formations on the abutting surface of the housing 20 to maintain the latter in a predetermined orientation of normal use relative to the bracket 10. However, if the housing 20 is subject to impact, either from in front or from behind, the detent formations 26 disengage from their complementary formations, compressing the spring 22 and allowing the housing 20 to fold forwardly or backwardly against the body of the vehicle.

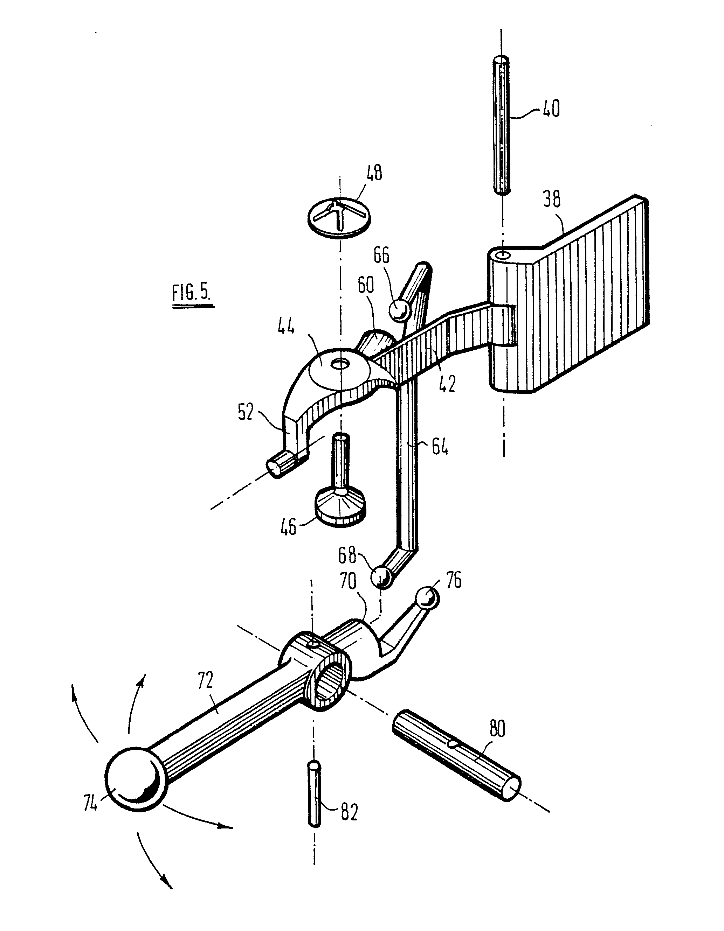

A reflective member 30 is secured to a mirror carrier 32 which is mounted within the housing 20 on a centrally located ball-and-socket joint 34. Between the ball-and-socket joint 34 and its edge nearest to the bracket 10, the mirror carrier 32 has a slide guide 36 for receiving a control slider 38. As can best be seen from Figure 5, the control slider 38 is pivotally connected, by a pivot pin 42, to a projecting limb 42 which is formed as an integral part of a part-spherical member 44. The part-spherical member 44 has its lower, concave, surface held in engagement, by a headed pin 46 and a part-spherical washer 48, with a complementary convex surface of a formation 50 which projects from the inside of the wall of the housing 20 closest to the bracket 10. The hole for the pin 46 in the formation 50 is oversized so as to allow limited relative angular movement of the part-spherical member about axes perpendicular to the axis of the pin 46.

The part-spherical member 44 has a second projecting limb 52, the outer end of which is received in a groove 54 formed in a thickened portion of the wall of the housing 20 just above the location thereof from which the formation 50 projects. The height of the groove 54 is approximately the same as that of the limb 52 so that the latter is restricted to horizontal movement between the ends 56 and 58 thereof.

A third limb 60, having a socket 62 on its free end, projects, from the part-spherical member 44 at an angle between the other two limbs 42 and 52. A coupling member 64, which extends axially through the bush 16 has, on its upper end, a radial limb carrying a ball 66 which engages in the socket 62. A corresponding radial limb on the lower end of the coupling member 64 carries a ball 68 which engages in a socket 70 located at an intermediate position along a lever 72 which is accommodated in the hollow horizontal limb 14 of the base member 10.

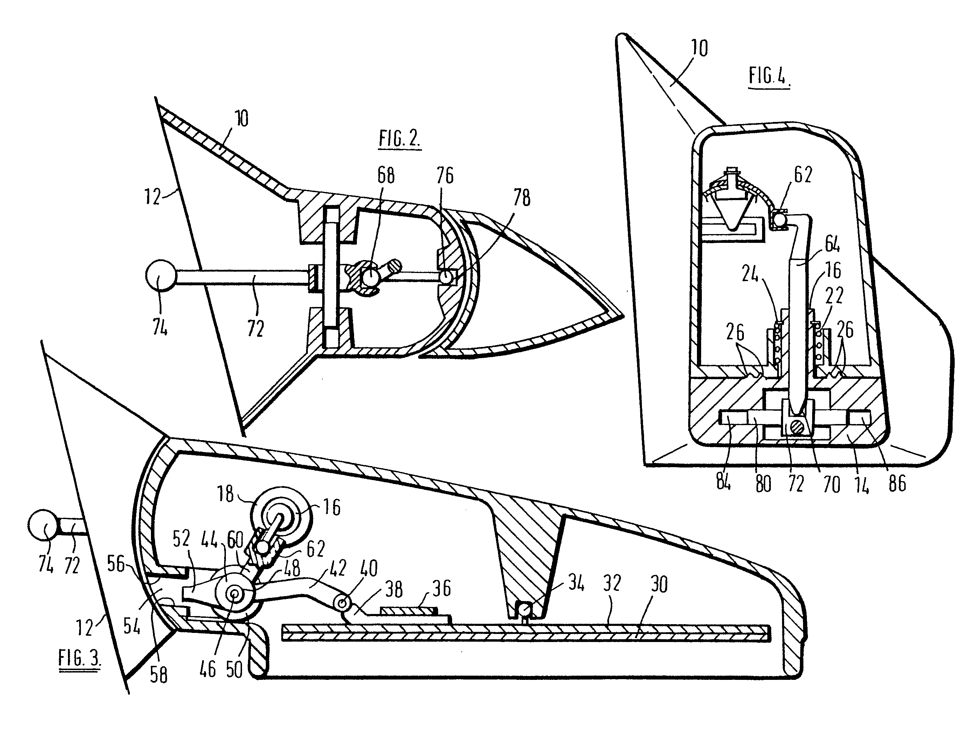

One end of the lever 72 is arranged to project into the interior of the vehicle on which the base member 10 is to be mounted and carries a knob 74 which can be grasped by a user. The other end carries a ball 76 which is received in a vertical groove 78 (Figure 2) formed in the inside of the wall of the base member 10 so that that end of the lever 72 can move vertically but not horizontally. A horizontal pivot pin 80 projects through an oversized hole in the lever 72 at a location between the socket 70 and the first-mentioned knob 74. A cross-pin 82, extending through the lever 72 and the horizontal pin 80, provides a vertical pivot axis for the lever 72. The ends of the horizontal pin 80 are received in bearings 84 and 86 (Figure 4) which allow limited axial movement.

In use, if the knob 74 is moved forwardly, the lever 72 is constrained by the slot 78 (Figure 4) to pivot about the ball 76. The socket 70 thus causes the ball 68 on the lower end of the coupling member 64 to move in a radial path about the axis of the latter, causing a corresponding radial movement of the ball 66 on its upper end. This movement of the ball 66 causes the part-spherical member 44 to pivot about the axis of the headed pin 46 in a direction to move the pivot pin 40, on the outer end of the first projection 42, rearwardly, thus tilting the reflective member 30 outwardly, i.e. so that its field of view is further from the vehicle. The resulting change of distance between the pin 40 and the ball-and-socket 34 (Figure 3) is accommodated by movement of the slider 38 in the slide guide 36. Conversely, rearward movement of the knob 74 on the lever 72 causes the field of view to move closer to the vehicle.

Upward movement of the knob 74 causes the lever 72 to pivot about the horizontal pin 80 so that the socket 68 moves downwardly. This causes downward axial movement of the coupling member 64. The resulting downward movement of the socket 62 in the limb 60, causes the part-spherical member to tilt on the formation 50 in a clockwise direction as viewed in Figure 4, thus imparting a corresponding movement to the reflective member 30 and raising its field of view. Conversely, downward movement of the knob 74 causes downward movement of the field view.

Since the coupling member 64, which links the part of the mechanism on the base member 10 to the mechanism in the housing 20, is coaxial with the breakaway axis formed by the bush 16 and the socket 28, the need to provide flexible or disengageable links is avoided.

## Claims

1. An exterior rearview mirror for a motor vehicle comprises a base member (10) adapted to be mounted on a vehicle body, a mirror housing (20) mounted on the base member (10) for angular movement relative thereto about a breakaway axis (16, 18), and a reflective member (30) mounted in the mirror housing (20) for angular movement about first and second mutually non-parallel adjustment axes lying in a plane parallel to the plane of the reflective member (30), characterised by a coupling member (64) coaxial with the breakaway axis (16, 18) and having one end (68) coupled to drive means (72) for effecting selective angular movement of the coupling member (64) about the breakaway axis (16, 18) and axial movement of the coupling member (64) along the breakaway axis (16, 18), and driven means (44) coupled to the other end (66) of the coupling member (64) and arranged to cause angular movement of the reflective member (30) about the first adjustment axis in response to axial movement of the coupling member (64) and angular movement of the reflective member (30) about the second adjustment axis in response to angular movement of the coupling member (64).

2. An exterior rearview mirror for a motor vehicle according to claim 1, characterised in that the drive means comprises a lever (72) pivotally mounted on the base member (10) for angular movement both about a first axis (78) parallel to the breaxaway axis (16, 18) and about a second axis (80) perpendicular to the breakaway axis (16, 18), the coupling member (64) being coupled to such lever at a location spaced from said pivot axes (78, 80).

3. An exterior rearview mirror for a motor vehicle according to claim 1 or 2, characterised in that the driven means comprises a part-spherical member (44) resiliently biased into engagement with a part-spherical surface (50) of the mirror housing (20) of equal radius but opposite curvature so as to permit relative angular movement about the centre of curvature, the part-spherical member (44) having a first projection (42) coupled to the reflective member (30), a second projection (52) adapted to engage with an abutment surface (54) of the base member (10) and a third projection (60) offset relative to a line joining the first and second projections (42, 52) and coupled to the coupling member (64), so that angular movement of the coupling member (64) causes corresponding angular movement of the part-spherical member about an axis parallel to the breakaway axis (16, 18) and axial movement of the coupling member (64) causes angular movement of the part-spherical member about an axis passing through the centre of curvature of the part-spherical surface and the first projection (42) therefrom.

4. An exterior rearview mirror for a motor vehicle according to claims 2 and 3, characterised in that the third projection (60) projects from the part-spherical surface on the opposite side of the line joining the first and second projections (42, 52), the second pivot axis (80) of the lever (72) is on the same side of the point of coupling (70) of the coupling member (64) as the end (74) of the lever (72) which is manipulated by the user and the first pivot axis (78) of the point of coupling (70) of the coupling member (64) as the end (74) of the lever (72) which is manipulated by the user.

FIG. 1.

0 186 366

0 186 366

FIG.4.

FIG.2.

FIG.3.

FIG.5.